# EUROPEAN PATENT SPECIFICATION

(11) **EP 4 382 725 B1**
(45) Date of publication and mention of the grant of the patent: **14.10.2026**
(21) Application number: 23208832.8
(22) Date of filing: 09.11.2023
(51) Int. Cl.: F04D 19/02, F04D 29/32, F01D 5/02, F04D 29/66, F16F 15/32, G01M 1/36

(54) **ROTOR BALANCING APPARATUS**
ROTORAUSWUCHTVORRICHTUNG
APPAREIL D'ÉQUILIBRAGE DE ROTOR

(30) Priority: 06.12.2022 GB 202218282
(43) Date of publication of application: 12.06.2024
(73) Proprietor: Rolls-Royce plc, London N1 9FX (GB)
(72) Inventor: Harrison, John, Derby, DE24 8BJ (GB)
(74) Representative: Rolls-Royce plc

(56) References cited:
- EP-A2- 1 243 811
- DE-A1- 102011 102 315
- FR-A1- 2 630 496
- US-A- 5 545 010
- US-A1- 2020 109 631
- US-A1- 2022 178 259

## Description

The present invention concerns a rotor balancing apparatus for a rotor of a gas turbine engine.

In a gas turbine engine, various rotors rotate at high rotational velocity in operation. A rotor and its components can be balanced before installation or if removed from the engine, but these methods are time consuming and can be unsuccessful if the balance state is affected by the installation process. It should be understood that solutions are required for balancing a rotor while it is installed and enclosed in a casing.

European patent application EP1243811A2 discloses a rotor balancing system which allows for fine tune onsite adjustment for turbomachinery comprises a rotor element having a row of locating slots and a device for reducing windage effects caused by the locating slots and protruding anti-rotation pins.

German patent application DE102011102315A1 discloses a gas turbine engine having a balancing arrangement. The balancing rings are arranged in the groove and rotatable relative to each other in a circumferential direction, where each ring has an unbalanced mass. The rings are rotatable by a tool that is operated in a mounted condition of a gas turbine and fixed relative to each other and relative to the groove by a fixing device.

The scope of the invention is set out in the appended claims.

According to a first aspect of the present invention there is provided a gas turbine engine rotor balancing apparatus as set out in claim 1.

The gas turbine engine rotor balancing apparatus may further comprise a substantially annular engine casing. The rotor, balancing mass, and mass adjustment apparatus may be contained within the engine casing.

The gas turbine engine rotor balancing apparatus may be configured to permit adjustment of the balancing mass while the rotor is *in-situ* in the engine casing.

The engine casing may comprise an access port formed through a wall of the engine casing, so as to provide access to the balancing mass and the mass adjustment apparatus within the casing. The access port may be a boroscope port. The access port may be provided at an axial position on the engine casing substantially coincident with an axial position of the balancing mass. A single access port may be provided, or a plurality of circumferentially spaced access ports may be provided.

The moveable spacing element may be moveable relative to one or both of the balancing mass and the rotor.

The mass adjustment apparatus may comprise a plurality of movable spacing elements spaced circumferentially about the balancing mass and/or the rotor, so as to set the radial spacing between the balancing mass and the rotor at a plurality of discrete positions about a circumference of the rotor.

The mass adjustment apparatus may comprise three moveable spacing elements spaced equidistantly about the circumference of the balancing mass.

The position of the moveable spacing element may be radially moveable relative to the balancing mass.

The moveable spacing element or elements may be a grub screw provided on the balancing mass. The grub screw may be configured to move substantially radially relative to the balancing mass by rotation of the grub screw. The or each grub screw may be arranged in a substantially radially extending bore in or through the balancing mass. An opening may be provided on the outer radial surface of the balancing mass to provide access to the grub screw.

The moveable spacing element may be arranged in a radially extending bore through the balancing mass. A radially outer opening of the bore may be smaller than the moveable spacing element. The or each bore may comprise a flange which extends into the bore at its radially outer end, such that the radially outer opening of the bore has a diameter less than the diameter of the moveable spacing element or grub screw.

The balancing mass may be configured to rotate with the rotor.

The mass adjustment apparatus may be configured to secure the balancing mass in a fixed position relative to the rotor, such that the balancing mass rotates with the rotor.

The rotor, the balancing mass, and/or the mass adjustment apparatus may comprise one or more keying features configured to secure the balancing mass in a fixed angular position relative to the rotor.

Where the mass adjustment apparatus comprises a spacing element, the rotor and/or the balancing mass may comprise a complementary keying feature, such as a recess or protrusion, configured to engage an end portion of the spacing element and secure the spacing element in a fixed angular position relative to the rotor and the balancing mass.

The rotor may comprise a substantially annular recess. The balancing mass may be configured to be at least partially received in the annular recess. The annular recess may be configured to secure the balancing mass at a fixed axial position relative to the rotor.

The rotor may comprise a first rotor component and a second rotor component arranged axially adjacent to the first rotor component. The balancing mass and/or the annular recess may be arranged at, or proximate to, a joint between the first and second rotor components.

According to a second aspect of the present invention, there is provided a gas turbine engine comprising a gas turbine engine rotor balancing apparatus according to the first aspect.

According to a third aspect of the present invention, there is provided an aircraft comprising one or more gas turbine engines according to the second aspect.

Embodiments will now be described by way of example only, with reference to the Figures, in which:
**Figure 1** is a sectional side view of a gas turbine engine;
**Figure 2** is a detailed sectional side view of a portion A of the gas turbine engine of Figure 1 on the plane A-A shown in Figure 3;
**Figure 3** is a schematic sectional axial view of the gas turbine engine core on the plane B-B of Figures 1 and 2; and

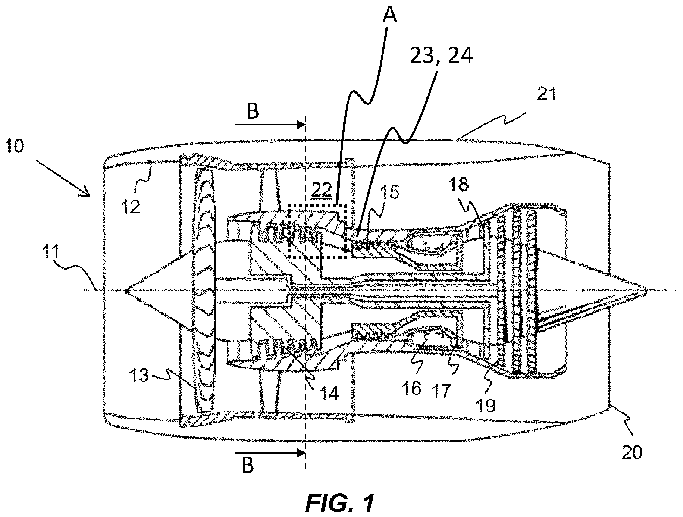

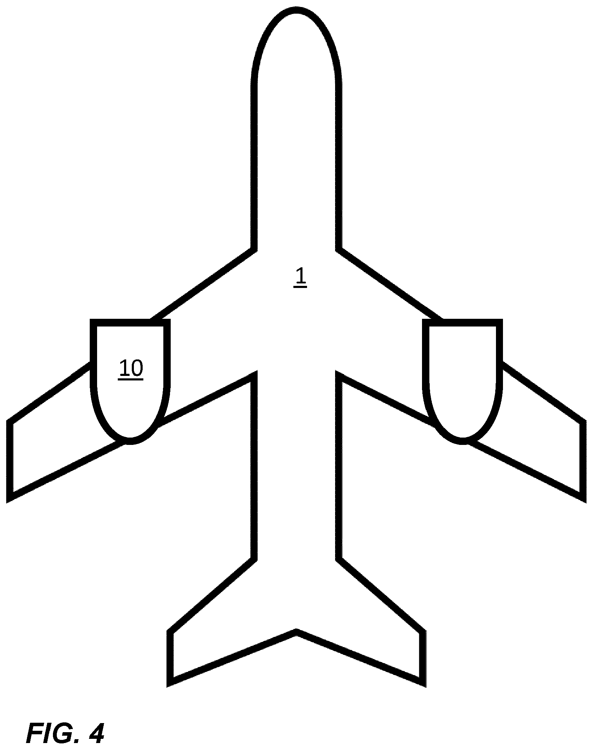

**Figure 4** is a schematic view of an aircraft comprising a gas turbine engine. With reference to Figure 1, a gas turbine engine is generally indicated at 10, having a principal and rotational rotor axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20. The intermediate pressure compressor 14, the high-pressure compressor 15, combustion equipment 16, the high-pressure turbine 17, the intermediate pressure turbine 18, and the low-pressure turbine 19 are all contained within a tubular engine casing 23, so as to form an engine core 24. The fan 13 is not located within the engine casing 23, but may still be considered to form part of the engine core 24.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g., two) and/or an alternative number of compressors and/or turbines. Further the engine may comprise a gearbox provided in the drive train from a turbine to a compressor and/or fan.

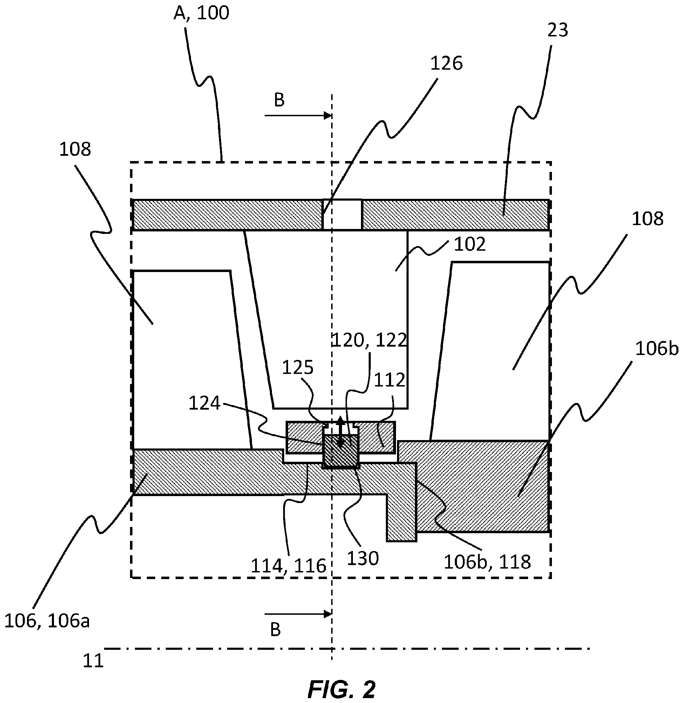

**Figure 2** shows a detailed sectional view of portion A of the gas turbine engine 10, as shown in Figure 1. In particular, Figure 2 shows a gas turbine engine rotor balancing apparatus 100.

Figure 2 shows a portion of the engine casing 23 and the internal structure of a representative portion of one of the compressors 14, 15.

A rotor 106 of the gas turbine engine 10 is also shown in Figure 2. In this example, the rotor 106 is a turbine rotor, but it should be understood that the principles of the present disclosure may also or alternatively be applied to various other rotors within the engine 10, such as compressor rotors, fan rotors, and interconnecting shafts. More generally, the principles of the disclosure may be applied to any rotating component in the gas turbine engine 10.

The rotor 106 is configured to rotate about the rotor axis 11. The casing 23 is static, and the rotor 106 rotates relative to the casing 23. The rotor 106 and the casing 23 are substantially coaxial about rotor axis 11.

In this example, the rotor 106 comprises a first rotor component 106a and a second rotor component 106b. The first rotor component 106a is arranged axially forward, and adjacent to the second rotor component 106b. A joint 106c is formed between the rotor components 106a,b, such that they are substantially fixedly connected, and rotate together as a single rotor 106.

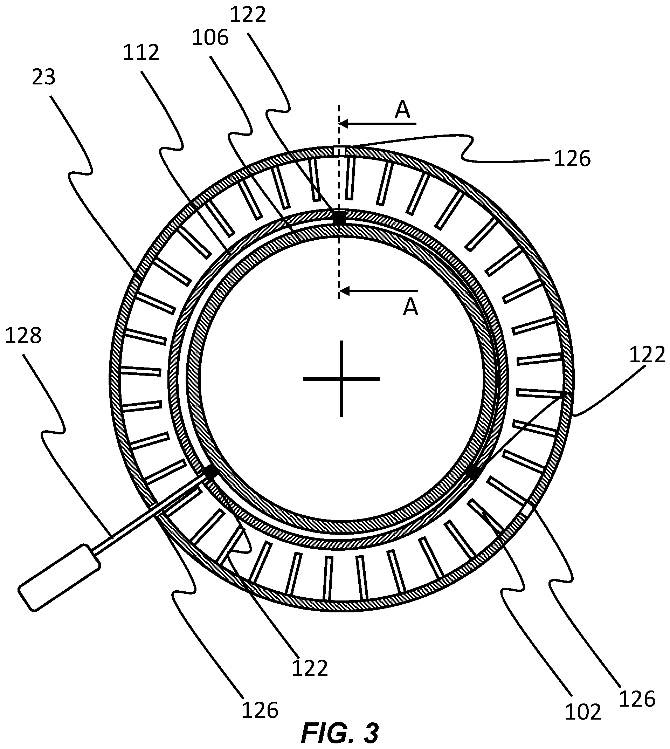

A number of static aerofoils or vanes 102 are secured to the radially inner surface 104 of the engine casing 23. The vanes 102 are circumferentially spaced about the casing 23 as also shown in Figure 3. A number of corresponding blades 108 are secured to the radially outer surface 110 of the rotor 106. In use, the rotor 106 rotates, which in turn rotates the blades 108, which compresses air travelling through the compressor.

The rotor 106 is a complex component comprising multiple subcomponents, such as the blades 108. It is known for a rotor to be balanced before installation in an engine casing. However, the installation process or general wear and use may cause the rotor to become unbalanced, which may cause excessive vibration or damage.

In order to facilitate balance adjustment while the rotor 106 is *in-situ* in the engine 10, a gas turbine engine rotor balancing apparatus 100 is provided. With reference to Figure 2 and Figure 3, the gas turbine engine rotor balancing apparatus 100 comprises a substantially annular balancing mass 112 configured to encircle the rotor 106. The balancing mass 112 takes the form of an annular ring. The balancing mass has an internal diameter and an external diameter, a thickness (in the up/down direction in Figure 2), and an axial length L (in the left/right direction in Figure 2). The internal diameter is larger than the external diameter of the rotor 106, and more specifically the section of the rotor overlaid by the mass 112, such that a radial spacing is provided between the mass 112 and the rotor 106.

The rotor 106 has a substantially annular recess 114 formed in its outer radial surface. The balancing mass 112 is configured to be at least partially received in the annular recess 114. Depending upon the relative position of the balancing mass 112 to the rotor 106, the balancing mass 112 may be partially received in the annular recess 114 around the entire circumference of the rotor 106, or partially received in the annular recess 114 about only a portion of the circumference of the rotor 106.

The annular recess 114 has an axial length slightly larger than the axial length of the balancing mass 112, such that the mass 112 is prevented from moving axially relative to the rotor 106 by the recess 114. In this way, the annular recess 114 is configured to secure the balancing mass 112 at a fixed axial position relative to the rotor 106.

The annular recess 114 is formed at the joint 106c between the rotor components 106a,b. The first rotor component 106a comprises recessed portion 116 at its rearward axial end having a reduced outer radius, and the second rotor component 106b comprises an annular groove 118 on its axial end-face into which the axial end of the recessed portion of the first rotor component 106a is received. This construction may enable the balancing mass 112 to be installed onto the rotor 106, by placing the mass 112 on the recessed portion 116 of the first rotor component 106a before it is joined to the second rotor component 106b.

In order to adjust the balancing of the rotor 106 *in-situ,* the relative position of the balancing mass 112 to the rotor 106 can be altered by a mass adjustment apparatus 120.

The mass adjustment apparatus 120 comprises three moveable spacing elements, in the form of grub screws 122, which are configured to contact the balancing mass 112 and the rotor 106, so as to set the radial spacing between the balancing mass 112 and the rotor 106. The grub screws 122 are received in three corresponding bores 124 formed radially through the balancing mass 112. Each bore 124 has an opening provided on the outer radial surface of the balancing mass 112 to provide access to the grub screw 122. In this example, three grub screws 122 are provided, but it should be understood that other numbers of moveable spacing elements may be able to achieve similar adjustment of an annular balancing mass in accordance with the present disclosure.

In this example, the moveable spacing elements and, more generally, the mass adjustment apparatus are embodied in a simple mechanical system using grub screws, so as to provide a robust and reliable system. However, it will be appreciated that there are other arrangements which may achieve similar adjustment of the balancing mass *in-situ,* such as electro-mechanical actuators,

The bores 124, and thus the grub screws 122, are spaced equidistantly circumferentially about the balancing mass 112. Each of the grub screws 122 is radially moveable relative to the balancing mass 112 (as shown by the arrow in Figure 2) by rotating the grub screw 122. Each grub screw 122 can be adjusted independently to protrude from the radially inner surface of the balancing mass 112 by a set distance in order to set the radial spacing between the balancing mass 112 and the rotor 106 at a plurality of discrete positions about a circumference of the rotor 106. In addition, the grub screws 122 can be tightened in order to grip the rotor 106 and thereby secure the balancing mass 112 to the rotor 106.

Each bore 124 comprises a flange 125 which extends into the bore 124 at the radially outer end, such that the radially outer opening of the bore has a diameter less than the diameter of the grub screw 122. This arrangement may prevent potential release of a grub screw 122 out of the bore 124 into the engine gas path, thereby improving safety.

As shown in Figure 3, the grub screws 122 may be adjusted in order to provide a non-uniform radial separation between the balancing mass 112 and the rotor 106 about the circumference of the rotor 106. In Figure 3, the difference in diameter between the mass 112 and the rotor 106 is significant to better illustrate the concept, but it should be understood that the difference in diameter may be less or more than that shown.

By providing a non-uniform radial separation between the balancing mass 112 and the rotor 106 about the circumference of the rotor 106, the centre of mass (i.e. the centre axis) of the balancing mass is displaced away from the rotor axis 11. As the balancing mass 112 is secured to the rotor 106, if there is any imbalance in the rotor 106, the grub screws 122 can be adjusted to position the balancing mass 112 such that it offsets the imbalance in the rotor 106.

In order to permit adjustment of the grub screws 122 *in-situ,* an access port 126 is formed through a wall of the engine casing 23. In this example, the access port 126 may be a pre-existing boroscope port used to inspect the engine 10 without dismantling. The access port 126 is provided at an axial position on the engine casing 23 substantially coincident with the axial position of the balancing mass 112. In this example, three access ports 126 are provided equidistantly around the casing 23, such that the three grub screws 122 may be adjusted concurrently, for example using tools 128. In other examples, a single access port may be provided, in which case the grub screws 122 may be adjusted individually. Plugs may be provided to close the access ports 126 when not in use.

It should be understood that in order to provide balancing function, the balancing mass 112 is configured to rotate with the rotor 106. In particular, the balancing mass 112 is securable in a fixed angular position relative to the rotor 106.

In this example, this angular fixing is provided by three keying features, in the form of keying recesses 130 which are formed in the annular recess 114. Three keying recesses 130 are provided equidistantly about the circumference of the annular recess 114, and each keying recess 130 is shaped to complement the radially inner end of one of the grub screws 122. Therefore, when a grub screw 122 is tightened, it is constrained by the keying recess 130, so as to secure the grub screw 122, and thus the balancing mass 112, in a fixed angular position relative to the rotor 106.

As shown in Figure 4, a gas turbine engine 10 comprising the gas turbine engine rotor balancing apparatus 100 may be provided on an aircraft 1.

## Claims

1. A gas turbine engine rotor balancing apparatus (100) comprising:
a rotor (106) configured to rotate about a rotor axis (11);
a substantially annular balancing mass (112) configured to encircle the rotor (106); and
a mass adjustment apparatus (120) for adjusting the position of the balancing mass (112) relative to the rotor (106), and **characterised in that** the mass adjustment apparatus (120) comprises a moveable spacing element (122) configured to contact the balancing mass (112) and the rotor (106) so as to set a radial spacing between the balancing mass (112) and the rotor (106).

2. The gas turbine engine rotor balancing apparatus (100) as claimed in Claim 1, further comprising a substantially annular engine casing (23), wherein the rotor (106), balancing mass (112), and mass adjustment apparatus (120) are contained within the engine casing (23).

3. The gas turbine engine rotor balancing apparatus (100) as claimed in Claim 2, wherein the engine casing (23) comprises an access port (126) formed through a wall of the engine casing (23), so as to provide access to the balancing mass (112) and the mass adjustment apparatus (120) within the casing (23).

4. The gas turbine engine rotor balancing apparatus (100) as claimed in Claim 1, wherein the mass adjustment apparatus (120) comprises a plurality of movable spacing elements (122) spaced circumferentially so as to set the radial spacing between the balancing mass (112) and the rotor (106) at a plurality of discrete positions about a circumference of the rotor (106).

5. The gas turbine engine rotor balancing apparatus (100) as claimed in Claim 1 or Claim 4, wherein the mass adjustment apparatus (120) comprises three moveable spacing elements (122) spaced equidistantly about the circumference of the balancing mass (112).

6. The gas turbine engine rotor balancing apparatus (100) as claimed in any one of Claims 1 or claims 4 to 5, wherein the position of the moveable spacing element (122) is moveable relative to the balancing mass (112).

7. The gas turbine engine rotor balancing apparatus (100) as claimed in any one of Claims 1 or claims 4 to 6, wherein the moveable spacing element (122) is a grub screw (122) provided on the balancing mass (112), the grub screw (122) being configured to move substantially radially relative to the balancing mass (112) by rotation of the grub screw (122).

8. The gas turbine engine rotor balancing apparatus (100) as claimed in any one of Claims 1 or claims 4 to 7, wherein the moveable spacing element (122) is arranged in a radially extending bore (124) through the balancing mass (112), and wherein a radially-outer opening of the bore (124) is smaller than the moveable spacing element (122).

9. The gas turbine engine rotor balancing apparatus (100) as claimed in any one of the preceding claims, wherein the balancing mass (112) is configured to rotate with the rotor (106), optionally wherein the mass adjustment apparatus (120) is configured to secure the balancing mass (112) in a fixed position relative to the rotor (106), such that the balancing mass (112) rotates with the rotor (106).

10. The gas turbine engine rotor balancing apparatus (100) as claimed in Claim 9, wherein the rotor (106), the balancing mass (112), and/or the mass adjustment apparatus (120) comprise one or more keying features (130) configured to secure the balancing mass (112) in a fixed angular position relative to the rotor (106).

11. The gas turbine engine rotor balancing apparatus (100) as claimed in any one of the preceding claims, wherein the rotor (106) comprises a substantially annular recess (114), and wherein the balancing mass (112) is at least partially received in the annular recess (114).

12. The gas turbine engine rotor balancing apparatus (100) as claimed in any one of the preceding claims, wherein the rotor (106) comprises a first rotor component (106a) and a second rotor component (106b) arranged axially adjacent to the first rotor component (106a), wherein the balancing mass (112) is arranged at, or proximate to, a joint (106c) between the first and second rotor components (106a, b).

13. A gas turbine engine (10) comprising a gas turbine engine rotor balancing apparatus (100) as claimed in any one of the preceding claims.

14. An aircraft (1) comprising one or more gas turbine engines as claimed in Claim 13.

## Patentansprüche

1. Gasturbinentriebwerk-Rotorauswuchtvorrichtung (100), umfassend:
einen Rotor (106), der dazu konfiguriert ist, sich um eine Rotorachse (11) zu drehen;
eine im Wesentlichen ringförmige Auswuchtmasse (112), die dazu konfiguriert ist, den Rotor (106) zu umgeben; und
eine Masseneinstellvorrichtung (120) zum Einstellen der Position der Auswuchtmasse (112) relativ zu dem Rotor (106), und **dadurch gekennzeichnet, dass** die Masseneinstellvorrichtung (120) ein bewegliches Abstandselement (122) umfasst, das dazu konfiguriert ist, die Auswuchtmasse (112) und den Rotor (106) zu berühren, um einen radialen Abstand zwischen der Auswuchtmasse (112) und dem Rotor (106) festzulegen.

2. Gasturbinentriebwerk-Rotorauswuchtvorrichtung (100) nach Anspruch 1, ferner umfassend ein im Wesentlichen ringförmiges Triebwerkgehäuse (23), wobei der Rotor (106), die Auswuchtmasse (112) und die Masseneinstellvorrichtung (120) innerhalb des Triebwerkgehäuses (23) enthalten sind.

3. Gasturbinentriebwerk-Rotorauswuchtvorrichtung (100) nach Anspruch 2, wobei das Triebwerkgehäuse (23) eine Zugangsöffnung (126) umfasst, die durch eine Wand des Triebwerkgehäuses (23) ausgebildet ist, um einen Zugang zu der Auswuchtmasse (112) und der Masseneinstellvorrichtung (120) innerhalb des Gehäuses (23) bereitzustellen.

4. Gasturbinentriebwerk-Rotorauswuchtvorrichtung (100) nach Anspruch 1, wobei die Masseneinstellvorrichtung (120) eine Vielzahl von beweglichen Abstandselementen (122) umfasst, die in Umfangsrichtung beabstandet sind, um den radialen Abstand zwischen der Auswuchtmasse (112) und dem Rotor (106) an einer Vielzahl von separaten Positionen um einen Umfang des Rotors (106) festzulegen.

5. Gasturbinentriebwerk-Rotorauswuchtvorrichtung (100) nach Anspruch 1 oder Anspruch 4, wobei die Masseneinstellvorrichtung (120) drei bewegliche Abstandselemente (122) umfasst, die äquidistant um den Umfang der Auswuchtmasse (112) beabstandet sind.

6. Gasturbinentriebwerk-Rotorauswuchtvorrichtung (100) nach einem der Ansprüche 1 oder Ansprüche 4 bis 5, wobei die Position des beweglichen Abstandselements (122) relativ zu der Auswuchtmasse (112) beweglich ist.

7. Gasturbinentriebwerk-Rotorauswuchtvorrichtung (100) nach einem der Ansprüche 1 oder Ansprüche 4 bis 6, wobei das bewegliche Abstandselement (122) ein Gewindestift (122) ist, der an der Auswuchtmasse (112) bereitgestellt ist, wobei der Gewindestift (122) dazu konfiguriert ist, sich im Wesentlichen radial relativ zu der Auswuchtmasse (112) durch Drehung des Gewindestifts (122) zu bewegen.

8. Gasturbinentriebwerk-Rotorauswuchtvorrichtung (100) nach einem der Ansprüche 1 oder Ansprüche 4 bis 7, wobei das bewegliche Abstandselement (122) in einer sich radial erstreckenden Bohrung (124) durch die Auswuchtmasse (112) angeordnet ist und wobei eine radial äußere Öffnung der Bohrung (124) kleiner als das bewegliche Abstandselement (122) ist.

9. Gasturbinentriebwerk-Rotorauswuchtvorrichtung (100) nach einem der vorhergehenden Ansprüche, wobei die Auswuchtmasse (112) dazu konfiguriert ist, sich mit dem Rotor (106) zu drehen, wobei die Masseneinstellvorrichtung (120) optional dazu konfiguriert ist, die Auswuchtmasse (112) in einer feststehenden Position relativ zu dem Rotor (106) zu befestigen, sodass sich die Auswuchtmasse (112) mit dem Rotor (106) dreht.

10. Gasturbinentriebwerk-Rotorauswuchtvorrichtung (100) nach Anspruch 9, wobei der Rotor (106), die Auswuchtmasse (112) und/oder die Masseneinstellvorrichtung (120) ein oder mehrere Verkeilungsmerkmale (130) umfassen, die dazu konfiguriert sind, die Auswuchtmasse (112) in einer feststehenden Winkelposition relativ zu dem Rotor (106) zu befestigen.

11. Gasturbinentriebwerk-Rotorauswuchtvorrichtung (100) nach einem der vorhergehenden Ansprüche, wobei der Rotor (106) eine im Wesentlichen ringförmige Aussparung (114) umfasst und wobei die Auswuchtmasse (112) mindestens teilweise in der ringförmigen Aussparung (114) aufgenommen ist.

12. Gasturbinentriebwerk-Rotorauswuchtvorrichtung (100) nach einem der vorhergehenden Ansprüche, wobei der Rotor (106) eine erste Rotorkomponente (106a) und eine zweite Rotorkomponente (106b) umfasst, die axial benachbart zu der ersten Rotorkomponente (106a) angeordnet ist, wobei die Auswuchtmasse (112) an oder in der Nähe einer Verbindungsstelle (106c) zwischen der ersten und der zweiten Rotorkomponente (106a, b) angeordnet ist.

13. Gasturbinentriebwerk (10), umfassend eine Gasturbinentriebwerk-Rotorauswuchtvorrichtung (100) nach einem der vorhergehenden Ansprüche.

14. Luftfahrzeug (1), ein oder mehrere Gasturbinentriebwerke nach Anspruch 13 umfassend.

## Revendications

1. Appareil d'équilibrage de rotor de moteur à turbine à gaz (100) comprenant :
un rotor (106) conçu pour tourner autour d'un axe de rotor (11) ;
une masse d'équilibrage sensiblement annulaire (112) configurée pour encercler le rotor (106) ; et
un appareil de réglage de masse (120) destiné à régler la position de la masse d'équilibrage (112) par rapport au rotor (106), et **caractérisé en ce que** l'appareil de réglage de masse (120) comprend un élément d'espacement mobile (122) conçu pour venir au contact de la masse d'équilibrage (112) et du rotor (106) de manière à définir un espacement radial entre la masse d'équilibrage (112) et le rotor (106).

2. Appareil d'équilibrage de rotor de moteur à turbine à gaz (100) selon la revendication 1, comprenant en outre un carter de moteur sensiblement annulaire (23), dans lequel le rotor (106), la masse d'équilibrage (112) et l'appareil de réglage de masse (120) sont contenus à l'intérieur du carter de moteur (23).

3. Appareil d'équilibrage de rotor de moteur à turbine à gaz (100) selon la revendication 2, dans lequel le carter de moteur (23) comprend un orifice d'accès (126) formé à travers une paroi du carter de moteur (23), de manière à fournir un accès à la masse d'équilibrage (112) et à l'appareil de réglage de masse (120) à l'intérieur du carter (23).

4. Appareil d'équilibrage de rotor de moteur à turbine à gaz (100) selon la revendication 1, dans lequel l'appareil de réglage de masse (120) comprend une pluralité d'éléments d'espacement mobiles (122) espacés circonférentiellement de manière à définir l'espacement radial entre la masse d'équilibrage (112) et le rotor (106) à une pluralité de positions discrètes autour d'une circonférence du rotor (106).

5. Appareil d'équilibrage de rotor de moteur à turbine à gaz (100) selon la revendication 1 ou la revendication 4, dans lequel l'appareil de réglage de masse (120) comprend trois éléments d'espacement mobiles (122) espacés de manière équidistante autour de la circonférence de la masse d'équilibrage (112).

6. Appareil d'équilibrage de rotor de moteur à turbine à gaz (100) selon l'une quelconque des revendications 1 ou 4 à 5, dans lequel la position de l'élément d'espacement mobile (122) est mobile par rapport à la masse d'équilibrage (112).

7. Appareil d'équilibrage de rotor de moteur à turbine à gaz (100) selon l'une quelconque des revendications 1 ou 4 à 6, dans lequel l'élément d'espacement mobile (122) est une vis sans tête (122) prévue sur la masse d'équilibrage (112), la vis sans tête (122) étant conçue pour se déplacer sensiblement radialement par rapport à la masse d'équilibrage (112) par rotation de la vis sans tête (122).

8. Appareil d'équilibrage de rotor de moteur à turbine à gaz (100) selon l'une quelconque des revendications 1 ou 4 à 7, dans lequel l'élément d'espacement mobile (122) est agencé dans un alésage s'étendant radialement (124) à travers la masse d'équilibrage (112), et dans lequel une ouverture radialement externe de l'alésage (124) est plus petite que l'élément d'espacement mobile (122).

9. Appareil d'équilibrage de rotor de moteur à turbine à gaz (100) selon l'une quelconque des revendications précédentes, dans lequel la masse d'équilibrage (112) est conçue pour tourner avec le rotor (106), facultativement dans lequel l'appareil de réglage de masse (120) est conçu pour fixer la masse d'équilibrage (112) dans une position fixe par rapport au rotor (106), de sorte que la masse d'équilibrage (112) tourne avec le rotor (106).

10. Appareil d'équilibrage de rotor de moteur à turbine à gaz (100) selon la revendication 9, dans lequel le rotor (106), la masse d'équilibrage (112) et/ou l'appareil de réglage de masse (120) comprennent une ou plusieurs caractéristiques de calage (130) conçues pour fixer la masse d'équilibrage (112) dans une position angulaire fixe par rapport au rotor (106).

11. Appareil d'équilibrage de rotor de moteur à turbine à gaz (100) selon l'une quelconque des revendications précédentes, dans lequel le rotor (106) comprend un évidement sensiblement annulaire (114), et dans lequel la masse d'équilibrage (112) est au moins partiellement reçue dans l'évidement annulaire (114).

12. Appareil d'équilibrage de rotor de moteur à turbine à gaz (100) selon l'une quelconque des revendications précédentes, dans lequel le rotor (106) comprend un premier composant de rotor (106a) et un second composant de rotor (106b) agencé axialement adjacent au premier composant de rotor (106a), dans lequel la masse d'équilibrage (112) est agencée au niveau ou à proximité d'un joint (106c) entre les premier et second composants de rotor (106a, b).

13. Moteur à turbine à gaz (10) comprenant un appareil d'équilibrage de rotor de moteur à turbine à gaz (100) selon l'une quelconque des revendications précédentes.

14. Aéronef (1) comprenant un ou plusieurs moteurs à turbine à gaz selon la revendication 13.
